# EUROPÄISCHE PATENTSCHRIFT

(11) **EP 2 498 591 B1**
(45) Veröffentlichungstag und Bekanntmachung des Hinweises auf die Patenterteilung: **26.02.2020**
(21) Anmeldenummer: 10771644.1
(22) Anmeldetag: 01.10.2010
(51) Int. Cl.: A01G 9/02, A01G 9/12

(54) **PFLANZTOPF**
PLANT POT
POT DE FLEUR

(30) Priorität: 12.11.2009 DE 202009015315 U
(43) Veröffentlichungstag der Anmeldung: 19.09.2012
(73) Patentinhaber: Pöppelmann Holding GmbH & Co. KG., 49393 Lohne (DE)
(72) Erfinder: ORSCHULIK, Günther, 49451 Holdorf (DE)
(74) Vertreter: Busse & Busse
(86) Internationale Anmeldenummer: PCT/EP2010/006011
(87) Internationale Veröffentlichungsnummer: WO 2011/057693

(56) Entgegenhaltungen:
- DE-A1- 4 120 745
- DE-A1-102008 024 741
- GB-A- 2 405 306
- GB-A- 2 418 339

## Beschreibung

Die vorliegende Erfindung betrifft einen Pflanztopf zur Aufzucht von Orchideen, deren Rispe mit einem Stab gestützt werden kann, mit einem gegenüber einer unteren Aufstellebene erhöhten Boden, der wenigstens eine Aufnahme für einen Stab aufweist.

Bei der Aufzucht von insbesondere Orchideen werden die Rispen zu einem bestimmten Zeitpunkt mit einem in einen Pflanztopf einzusteckenden Stab gestützt. Problematisch ist hierbei die Fixierung des Stabes. Einerseits kann der Stab durch Substrat und gegebenenfalls Wurzelwerk gestützt werden, was jedoch insbesondere bei losem Substrat für Orchideen und sich weiter ausbildendem Wurzelwerk zu Schiefstellungen des Stabes und mangelhafter Abstützung führen kann. Andererseits ist es bekannt, einen Stab durch eine im Boden eines Pflanztopfes vorzusehende Aufnahme in Form eines Loches hindurchzustecken, wobei der Durchmesser des Stabes auf das im Boden des Pflanztopfes befindliche Loch abzustimmen ist. Hierbei wird der Stab bei dessen korrekter Dimensionierung durch den Lochrand zwar gehalten, aufgrund der in etwa auf einer Höhe oberhalb einer waagerechten Standfläche am Stab verlaufenden Anlage des Lochrandes ergibt sich jedoch ebenfalls nur eine mangelhafte Abstützung.

Ein entsprechender gattungsgemäßer Gegenstand ist der DE 10 2008 024 741 A1 zu entnehmen.

Aus der GB 2418339 ist eine Einlegeplatte für Pflanztöpfe bekannt, die hohlzylindrische auf ihr befestigte Aufnahmen aufweist, in die von oben hinein Stängel von Pflanzen gesteckt werden können. Ebenfalls ist aus der GB 2405306 eine separate Einlegeplatte bekannt, durch die Stützvorrichtungen in einem Pflanztopf stabilisiert und somit angeordnet werden können.

Es ist daher Aufgabe der vorliegenden Erfindung, einen Pflanztopf dergestalt weiter zu bilden, dass ein in den Pflanztopf einzusteckender Stab ausreichend abgestützt werden kann.

Die Aufgabe wird gelöst durch einen Pflanztopf gemäß Anspruch 1. Vorteilhafte Weiterbildungen eines Pflanztopfes sind den auf den Anspruch 1 rückbezogenen Unteransprüchen sowie der nachfolgenden Beschreibung zu entnehmen.

Erfindungsgemäß ist der Aufnahme des Pflanztopfes zumindest eine Lasche zugeordnet, mittels der auf einen in die Aufnahme einsteckbaren oder einzusteckenden Stab eine Kraft ausgeübt werden kann. Diese Lasche stellt gegenüber den weiteren Anlagepunkten des Bodens bzw. der Aufnahme eine zusätzliche Führung oder Halterung dar, die den Stab zusätzlich fixieren kann.

Hierbei ist die Lasche durch Einführen eines Stabes, d.h. bei bestimmungsgemäßer Verwendung des Pflanztopfes, durch die Aufnahme in eine teilweise gegenüber einem Umgebungsbereich der Aufnahme abgewinkelte oder abgeklappte, nach unten vom Boden abstehende Position überführbar. In der Gebrauchsstellung steht die Lasche somit als Teil des Bodens nach unten vom Rest des Bodens ab.

Insbesondere kann zur gezielten Führung des Stabes in eine Vorzugsrichtung aufgrund der von der Lasche ausgeübten Kraft ein Drehmoment auf diesen ausgeübt werden. Hierbei wird der Stab mit seinem oberhalb des Bodens befindlichen Teil vorzugsweise in Richtung einer zentralen Längsmittelachse gedrückt bzw. gedreht. Erfindungsgemäß ist die Lasche Teil der Aufnahme und somit Teil des Bodens.

Die von der Lasche auf einen in den Pflanztopf einzubringenden Stab auszuübende Kraft kann sich als Gegenkraft auf eine durch Einstecken des Stabes in den Pflanztopf aufgebrachte Kraft ergeben.

Der Stab zum Stützen einer Rispe ist nicht notwendigerweise Teil der Erfindung. Des Weiteren ist die Lasche ein Teil des Pflanztopfes, welches in der Gebrauchsstellung mit Stab ein abgeklapptes, abgeknicktes oder gebogenes Ende aufweist.

Anderenends geht die Lasche in den Pflanztopfboden über.

Das Material des Bodens des Pflanztopfes oder des Pflanztopfes selbst kann hierbei so elastisch ausgebildet sein, dass die Lasche zwar nach unten bewegbar ist, der Rest Bodens jedoch ohne Weiteres in seiner Integrität bestehen bleiben kann. Hierbei ist Lasche mittels eines durch eine Schwächungslinie des Pflanztopfes ausgebildeten Filmscharniers mit dem Rest des Bodens verbunden, wobei die Lasche dann bei Einschieben eines Stabes abknicken oder abklappen kann. Insbesondere ist dieses Filmscharnier so stark ausgebildet, dass nach Anordnung des Stabes auf diesen eine Kraft ausgeübt werden kann. Bei einer ausreichend elastischen Lasche schmiegt sich diese teilweise an den Stab an, wodurch dieser insbesondere aufgrund von Reibungskräften besser gehalten werden kann.

Durch eine in einer Gebrauchsstellung an dem Stab anliegende Lasche, die nach unten vom Boden in Richtung Aufstellebene absteht, wird auf den Stab unterhalb des Pflanztopfbodens eine Kraft ausgeübt. Sofern der Stab an weiteren Anlagepunkten der Aufnahme auf Bodenhöhe abgestützt ist, ergibt sich aufgrund der unterschiedlichen Höhe der Anlagepunkte der Lasche einerseits und der Aufnahme andererseits ein Drehmoment auf den Stab, welches insbesondere den oberhalb des Bodens befindlichen Teil des Stabes in Richtung einer zentralen Längsmittelachse drücken kann.

Erfindungsgemäß ist die Lasche dergestalt ausgebildet, dass sie in einer Nichtbenutzungsposition ausgehend von ihrer Verbindung mit dem Rest des Bodens von einer zentralen Längsmittelachse wegführt. Sie kann hierbei beispielsweise dreieckig, mit einer von der zentralen Längsmittelachse wegführenden Spitze oder auch u- oder v-förmig ausgebildet sein. Die Verbindung zum Rest des Bodens ist durch eine Schwächungslinie bzw. durch ein Filmscharnier ausgebildet. Auch der Rest der Lasche ist durch bodenseitige Schwächungslinien ausgebildet. Dies ist insbesondere bei einer Vielzahl von in einem Boden ausgebildeten Aufnahmen von Vorteil. Der Boden ist somit so lange geschlossen, bis ein Stab durch eine Aufnahme durchgesteckt wird. Demzufolge tritt weniger Substratverlust auf.

Die insbesondere aus dem Material des Bodens und mit diesem einstöckig hergestellte Lasche ist bei einer vorteilhaften Weiterbildung elastisch ausgebildet und kann sich insbesondere zumindest teilweise an einen in den Pflanztopf einzusteckenden Stab anlehnen, wodurch dieser besser geführt werden kann.

Erfindungsgemäße Pflanztöpfe mit einer Mehrzahl von Aufnahmen im Bodenbereich machen die Anordnung eines einzusteckenden Stabes einfacher, wenn sie mehr oder weniger regelmäßig über den Boden verteilt sind. Auch eine unregelmäßige Verteilung der einzelnen Aufnahmen auf den Boden kann die Anordnung eines Stabes verbessern. Der Stab kann ohne auf bestimmte Zielbereiche achten zu müssen in den Boden eingesteckt werden. Hierbei ist zu bedenken, dass die Stäbe insbesondere dann erst in den Pflanztopf eingesteckt werden, wenn bereits Pflanzen und Substrat im Pflanztopf angeordnet sind und der Boden des Topfes von oben nicht mehr sichtbar ist.

Vorzugsweise sind zumindest zwei Aufnahmen von einer zentralen Längsmittelachse wenigstens teilweise unterschiedlich beabstandet, so dass auf unterschiedlichen Umfangslinien um eine zentrale Längsmittelachse Aufnahmen angeordnet sind. Dies vereinfacht die Verwendung des Stützstabes weiterhin.

Bei einer mit einer oder mehreren elastischen oder abknickbaren Laschen versehenen Aufnahme können vorteilhafterweise Stäbe mit verschiedenen Durchmessern verwendet werden.

Bei einer weiteren vorteilhaften Ausgestaltung der Erfindung sind die Aufnahmen um einen zentralen, keine Aufnahme aufweisenden Bereich des Bodens angeordnet, wodurch insbesondere bei einer Entnahme aus einem Übertopf keine Beschädigung des Bodens auftritt.

Erfindungsgemäß ist der Topf insbesondere im Spritzgußverfahren hergestellt, wobei der mit den Aufnahmen versehene Topfboden Fließhilfen aufweisen kann, die auch in Randbereichen des Pflanztopfes eine gute Ausbildung von Laschen gewährleisten. Eine solche Fließhilfe kann von einem zentralen Anspritzpunkt in radialer Richtung durch größere Durchmesser im Werkzeug bewirkt werden, wodurch auch vom Anspritzpunkt entfernt liegende und fein ausgebildete Laschen mit ausreichend Material versehen werden können. Der erfindungsgemäße Pflanztopf weist dann dickere Rippen im Boden auf, die gleichzeitig eine Stabilisierung des Bodens bewirken.

Einzelne Aufnahmen können vorteilhafterweise über Führungen beispielsweise durch Erhebungen oder Verdickungen des Bodens voneinander getrennt werden, so dass von oben in den Pflanztopf einzusteckende Stäbe in Richtung einer Schwächungslinie bzw. einer Laschenspitze geführt werden. Dies erleichtert ein Einstecken eines vorzusehenden Stabes. Solche Führungen können insbesondere mit Fließhilfen verbunden sein oder gleichzeitig Fließhilfen darstellen, was die Herstellung des Pflanztopfes weiter vereinfacht.

Eine auf einen einzusteckenden Stab in dessen Haltestellung im Pflanztopf ausgeübte Kraft kann insbesondere dann vergrößert werden, wenn die Lasche bei einem nach unten aus dem Boden Herausdrücken, -klappen oder -biegen gegen eine Abstützung stößt, die teilelastisch sein kann. Hierbei kann es sich beispielsweise um Ecken, Vorsprünge oder auch angeformte Federn des Bodens, die insbesondere einstückig mit diesem verbunden sein können, handeln.

Weitere Vorteile und Einzelheiten der Erfindung lassen sich der nachfolgenden Figurenbeschreibung entnehmen. Schematisch dargestellt zeigt:
- Fig. 1: einen Längsschnitt durch einen erfindungsgemäßen Pflanztopf
- Fig. 2: den Gegenstand nach Figur 1 in einer Draufsicht
- Fig. 3: einen weiteren erfindungsgemäßen Gegenstand in einer Draufsicht,
- Fig. 4: einen weiteren erfindungsgemäßen Gegenstand in einer Draufsicht,
- Fig. 5: einen weiteren erfindungsgemäßen Gegenstand in einer Draufsicht,
- Fig. 6: einen weiteren erfindungsgemäßen Gegenstand in einer Draufsicht.

Gleich oder ähnlich wirkende Teile sind - sofern dienlich - mit identischen Bezugsziffern versehen. Einzelne technische Merkmale der nachfolgend beschriebenen Ausführungsbeispiele können auch mit den Merkmalen der vorbeschriebenen Ausführungsbeispiele zu erfindungsgemäßen Weiterbildungen führen.

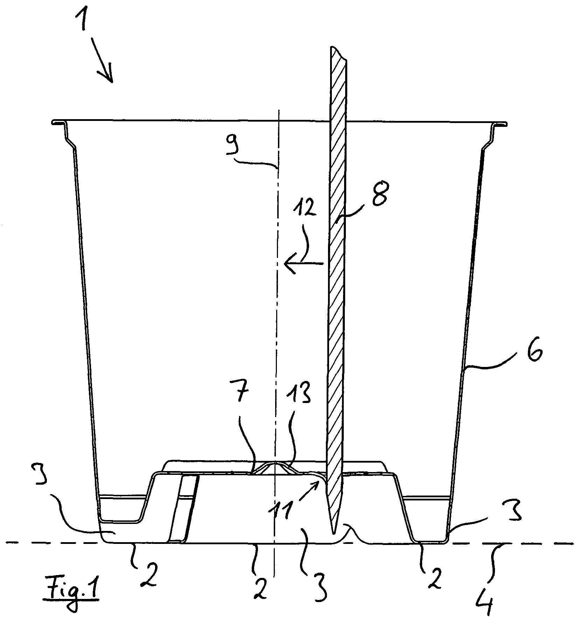

Fig. 1 zeigt einen erfindungsgemäßen Pflanztopf 1, der über Unterseiten 2 von Füßen 3 auf einer Aufstellebene 4 steht. Die Füße 3 sind bei diesem Ausführungsbeispiel einstückig mit einer umlaufenden Wand 6 ausgebildet, die beispielsweise seitliche Lüftungsschlitze aufweist. Alternativ oder ergänzend kann es sich auch um eine durchsichtige Kunststoffwand handeln.

Ebenfalls einstückig mit den Füßen 3 und somit auch mit der Wand 6 ist ein Boden 7 ausgebildet, der gegenüber der Aufstellebene 4 erhöht ist. In den zwischen Aufstellebene 4 und Boden 7 ausgebildeten Zwischenraum ragt die Spitze eines durch eine Aufnahme des Bodens 7 hindurch gesteckten Stabes 8. Durch die von dem erfindungsgemäßen Pflanztopf mit einer Lasche 11 ausgebildete Aufnahme wird auf einen oberhalb des Bodens 7 befindlichen Teil des Stabes 8 ein in Richtung einer zentralen Längsmittelachse 9 wirkenden Drehmoment ausgeübt. Dieses Drehmoment ergibt sich aufgrund der in der Figur dargestellten unterschiedlichen Anlagepunkte des Stabes 8 einerseits an einer Lasche 11 und andererseits auf Höhe des Bodens 7. Der Anlagepunkt an der Lasche 11 liegt an dem von der zentralen Längsmittelachse 9 wegweisende Ende der Lasche, während auf der anderen Seite des Stabes 8 der Rand der Ausnehmung der Aufnahme, durch die der Stab 8 durchgesteckt ist, wenigstens einen Anlagepunkt, oftmals eine Anlagefläche oder -linieausbildet. Diese Anlagepunkte befinden sich in unterschiedlichen Höhen über der Aufstellebene 4, so dass der Stab ein Drehmoment erfährt, welches eine durch einen Pfeil 12 gekennzeichnete Komponente parallel zur Aufstellebene 4 und in Richtung der zentralen Längsmittelachse 9 aufweist.

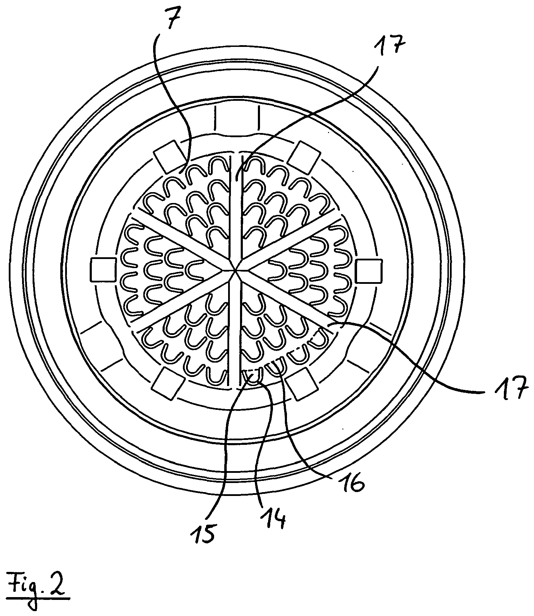

Der Boden 7 weist eine Vielzahl von um einen zentralen Dom 13 herum angeordnete Aufnahmen auf, die (sh. Fig. 2) den Boden 7 bedecken. Eine Aufnahme wird hierbei durch eine von einer Ausnehmung 14 begrenzte Lasche 15, der Ausnehmung selbst sowie deren Rand ausgebildet. Die Ausnehmungen 14 weisen eine Hauptklapplinie 16 auf, die nur bei einer geringen Anzahl von Laschen eingezeichnet ist. Diese Linie 16 bildet den Übergang der Lasche zum Rest des Bodens aus. Die Laschen weisen mit ihrem in einer Gebrauchstellung gemäß Fig. 1 am Stab 8 anliegenden Ende von einer zentralen Längsmittelachse 9 weg. Über jede Aufnahme kann ein Drehmoment in Richtung der zentralen Längsmittelachse 9 erzeugt werden.

Fließhilfen 17 sind ebenfalls regelmäßig um die zentrale Längsmittelachse 9 angeordnet, damit auch die in den äußeren Bodenrandbereichen befindlichen Aufnahmen bzw. deren Laschen 15 während eines Fertigungsganges mit ausreichend Material versorgt werden. Die die Laschen 15 ausbildenden Hohlräume eines zugehörigen Werkzeugs werden so von einem zentralen Anspritzpunkt, der sich auf der Achse 9 befindet, ausreichend mit Kunststoff versorgt.

Die verschiedenen Laschen 15 weisen unterschiedliche Entfernungen von der Zentralachse auf, so dass eine Vielzahl von Positionierungen eines Stabes 8 ermöglicht wird. Die Fließhilfen 17 können gegenüber dem Rest des Bodens 7 geringfügig erhöht und mit abfallenden Flanken versehen sein, so dass eine Stabspitze, die auf eine Fließhilfe trifft, nach links oder rechts hin zu einer Lasche abgleitet.

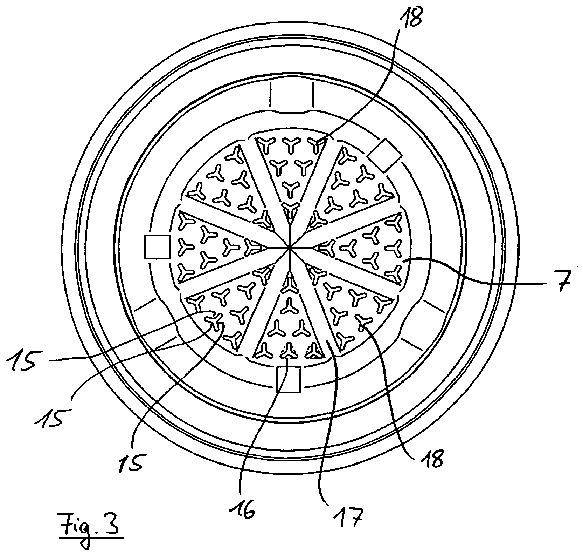

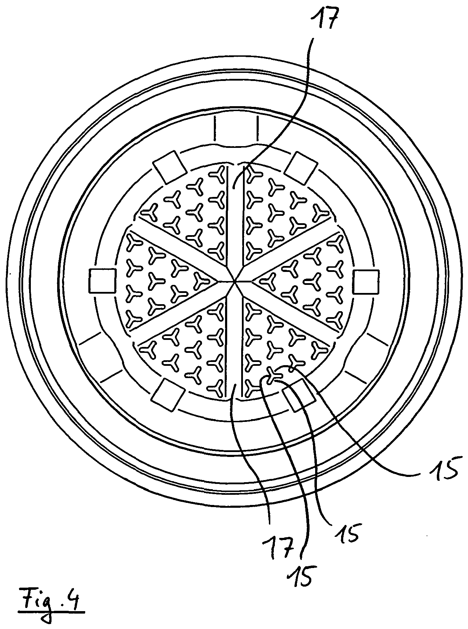

Die Aufnahmen des erfindungsgemäßen Pflanztopfs gemäß Fig. 3 und 4 weisen jeweils drei Laschen 15 auf, die über eine Schwächungslinie oder Ausnehmung 18 mit einer Y-förmigen Form voneinander getrennt sind. Die einzelnen Laschen 15 sind nach Art eines gleichschenkligen Dreiecks mit einer längeren Basis ausgebildet.

Je nach Anzahl der vorzusehenden Fließhilfen 17 können die zwischen den Fließhilfen befindlichen Bereiche mit unterschiedlich vielen Aufnahmen versehen werden. So sind in dem Ausführungsbeispiel gemäß Fig. 4 sechs Fließhilfen in radialer Richtung vorgesehen, während in dem Ausführungsbeispiel gemäß Fig. 3 acht Fließhilfen 17 verwendet werden. Hierdurch ändert sich die Anzahl der zwischen den Fließhilfen angeordneten Aufnahmen.

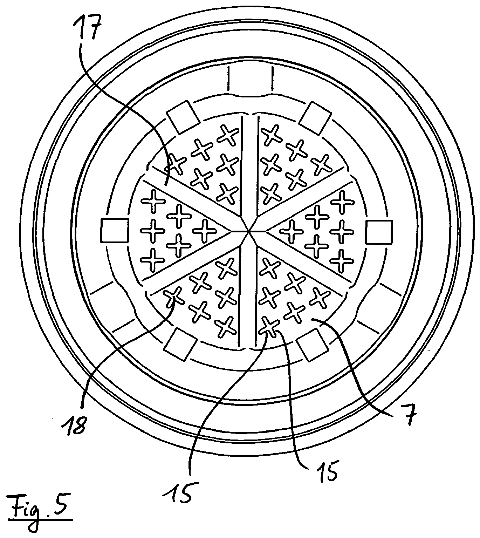

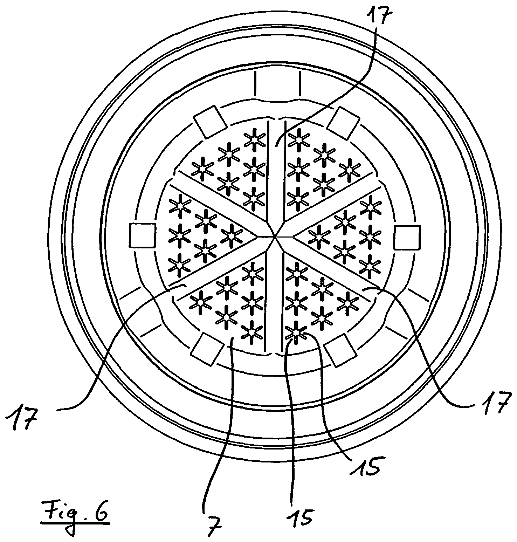

In den Ausführungsbeispielen nach den Figuren 3 bis 6 weist jede Aufnahme mehr als eine Lasche 15 auf. Gemeinsam ist diesen Aufnahmen, dass sie durch Einführung eines Stabes in eine gegenüber einem Umgebungsbereich der Aufnahme wenigstens teilweise abgeklappte nach unten von dem Boden 7 abstehende Position überführbar sind. Bei einem Durchstecken des Stabes durch eine Aufnahme nach den Figuren 3, 4, 5 und 6 wird von den zugehörigen Laschen 15 eine gleichmäßig entlang des Umfangs eines Stabes 8 verteilte Kraft auf diesen ausgeübt. Insbesondere bei den etwas längeren Laschen 15 der Ausführungsbeispiele gemäß Figur 5 und 6 ist die von den elastischen Laschen ausgeübte Klemmkraft über deren jeweilige Anlagefläche an dem Stab verteilt, so dass sich der Stab aufgrund höherer Reibung sicherer in der Aufnahme befindet. Zwischen den einzelnen, Laschen 15 aufweisenden Aufnahmen können zusätzliche Fließhilfen in Form von Verdickungen des Bodens 7 angeordnet sein, die gleichzeitig Führungen ausbilden. Mit zunehmender Anzahl von Laschen wird ein Stab 8 ausgehend von dem Beispiel der Fig. 3 bis hin zum Beispiel der Fig. 6 gleichmäßiger entlang des Umfangs verteilt abgestützt. Hierbei sind die Laschen alle v-förmig ausgebildet. Zur noch besseren Anlage einer Lasche an einen Stab kann die Spitze einer Lasche zusätzlich mit einer auf die Umfangsform des Stabes angepassten Form versehen sein.

## Patentansprüche

1. Pflanztopf zur Aufzucht von Orchideen, deren Rispe mit einem Stab (8) gestützt werden kann, mit einem gegenüber einer unteren Aufstellebene (4) erhöhten Boden (7) des Pflanztopfes, der eine Mehrzahl von Aufnahmen für einen Stab (8) aufweist, **dadurch gekennzeichnet, dass** den Aufnahmen jeweils zumindest eine als Teil des Bodens ausgebildete Lasche (15) zugeordnet ist, mittels der auf einen in die Aufnahme einsteckbaren Stab (8) eine Kraft ausübbar ist, wobei die Laschen (15) jeweils durch Einführen des Stabes (8) durch die Aufnahme in eine gegenüber einem Umgebungsbereich der Aufnahme wenigstens teilweise abgeklappte, nach unten von dem Boden (7) abstehende Position überführbar sind, wobei die Laschen (15) in einer Nichtbenutzungsposition ausgehend von ihrer Verbindung (16) mit dem Rest des Bodens (7) von einer zentralen Längsmittelachse (9) wegführen und durch bodenseitige Schwächungslinien ausgebildet sind.

2. Pflanztopf nach Anspruch 1, **dadurch gekennzeichnet, dass** die Lasche (15) elastisch ausgebildet ist.

3. Pflanztopf nach Anspruch 2, **dadurch gekennzeichnet, dass** die Lasche (15) aufgrund ihrer Elastizität zur zumindest teilweisen Anlage an den in den Pflanztopf einzusteckenden Stab (8) ausgebildet ist.

4. Pflanztopf nach einem der vorherigen Ansprüche, **dadurch gekennzeichnet, dass** die Aufnahme wenigstens eine weitere Lasche aufweist.

5. Pflanztopf nach einem der vorherigen Ansprüche, **dadurch gekennzeichnet, dass** die Aufnahmen über eine Führung (17) voneinander getrennt sind.

6. Pflanztopf nach einem der vorherigen Ansprüche, **dadurch gekennzeichnet, dass** zumindest zwei Aufnahmen von einer zentralen Längsmittelachse (9) unterschiedlich weit beabstandet sind.

7. Pflanztopf nach einem der vorherigen Ansprüche, **dadurch gekennzeichnet, dass** die Aufnahmen um einen zentralen und keine Aufnahmen aufweisenden Bodenbereich (13) herum angeordnet sind.

8. Pflanztopf nach einem der vorherigen Ansprüche, **gekennzeichnet durch** wenigstens eine vom Boden ausgebildete Fließhilfe.

9. Pflanztopf nach einem der vorherigen Ansprüche, **gekennzeichnet durch** einen vorzugsweise aus Bambus hergestellten Stab zum Stützen einer Rispe.

10. Pflanztopf nach einem der vorherigen Ansprüche, **gekennzeichnet durch** eine Abstützung der Lasche (15), die durch eine auf einer Unterseite des Bodens (7) angeordnete Anformung ausgebildet wird.

## Claims

1. Plant pot for growing orchids, the panicle of which orchid can be supported by a rod (8), said plant pot having a plant pot base (7) which is higher than a lower installation plane (4) and which has a plurality of receptacles for a rod (8), **characterised in that** at least one tab (15) that is formed as part of the base is assigned to each of the receptacles, by means of which tab a force can be exerted on a rod (8) which can be inserted into the receptacle, it being possible to transfer the tabs (15) in each case, by inserting the rod (8) through the receptacle, into a position which is at least partially folded down relative to a surrounding region of the receptacle and which projects downwards from the base (7), the tabs (15), when in a non-use position, leading away from a longitudinal central axis (9) starting from the connection (16) of said tabs to the rest of the base (7) and being formed by lines of weakness on the base.

2. Plant pot according to claim 1, **characterised in that** the tab (15) is elastic.

3. Plant pot according to claim 2, **characterised in that** the tab (15), due to the elasticity thereof, is designed to at least partially abut the rod (8) that is to be inserted into the plant pot.

4. Plant pot according to any of the preceding claims, **characterised in that** the receptacle has at least one further tab.

5. Plant pot according to any of the preceding claims, **characterised in that** the receptacles are separated from one another by means of a guide (17).

6. Plant pot according to any of the preceding claims, **characterised in that** at least two receptacles are differently spaced apart from a longitudinal central axis (9).

7. Plant pot according to any of the preceding claims, **characterised in that** the receptacles are arranged around a central base region (13) which has no receptacles.

8. Plant pot according to any of the preceding claims, **characterised by** at least one flow aid formed from the base.

9. Plant pot according to any of the preceding claims, **characterised by** a rod, preferably made of bamboo, for supporting a panicle.

10. Plant pot according to any of the preceding claims, **characterised by** a support for the tab (15), which support is formed by a moulding arranged on an underside of the base (7).

## Revendications

1. Pot pour la culture de plantes afin de cultiver des orchidées dont la panicule peut être soutenue par un tuteur (8), avec un fond (7) du pot qui est rehaussé par rapport à un plan de montage (4) inférieur, qui présente une pluralité de logements pour un tuteur (8), **caractérisé en ce qu'**au moins une languette (15) qui est réalisée comme une partie du fond le logement est attribué respectivement aux logements, au moyen de laquelle une force peut être exercée sur un tuteur (8) pouvant être enfoncé dans le logement, dans lequel les languettes (15) peuvent être placées, respectivement en introduisant le tuteur (8) à travers le logement, dans une position qui est au moins partiellement rabattue par rapport à une zone entourant le logement, qui peut être transférée à une certaine distance du fond (7) vers le bas, dans lequel les languettes (15) dans une position de non-utilisation sont orientées à l'opposé de leur liaison (16) avec le reste du fond (7) à partir d'un axe médian longitudinal (9) central et sont réalisées par des lignes de faiblesse du côté du fond.

2. Pot pour la culture de plantes selon la revendication 1, **caractérisé en ce que** la languette (15) est réalisée élastique.

3. Pot pour la culture de plantes selon la revendication 2, **caractérisé en ce que** la languette (15) est réalisée en raison de son élasticité de manière à s'appuyer au moins partiellement contre le tuteur (8) à enfoncer dans le pot.

4. Pot pour la culture de plantes selon l'une quelconque des revendications précédentes, **caractérisé en ce que** le logement présente au moins une autre languette.

5. Pot pour la culture de plantes selon l'une quelconque des revendications précédentes, **caractérisé en ce que** les logements sont séparés les uns des autres par l'intermédiaire d'un guide (17).

6. Pot pour la culture de plantes selon l'une quelconque des revendications précédentes, **caractérisé en ce qu'**au moins deux logements sont à des distances différentes d'un axe médian longitudinal (9) central.

7. Pot pour la culture de plantes selon l'une quelconque des revendications précédentes, **caractérisé en ce que** les logements sont agencés tout autour d'une zone de fond (13) centrale et ne présentant pas de logements.

8. Pot pour la culture de plantes selon l'une quelconque des revendications précédentes, **caractérisé par** au moins une aide à l'écoulement réalisée par le fond.

9. Pot pour la culture de plantes selon l'une quelconque des revendications précédentes, **caractérisé par** un tuteur fabriqué de préférence en bambou pour soutenir une panicule.

10. Pot pour la culture de plantes selon l'une quelconque des revendications précédentes, **caractérisé par** un appui de la languette (15), lequel est réalisé par un surmoulage situé sur un dessous du fond (7).
